(19) **Europäisches Patentamt**
**European Patent Office**
**Office européen des brevets**

(11) **EP 1 903 774 A2**

(12) **EUROPEAN PATENT APPLICATION**

(43) Date of publication:
26.03.2008 Bulletin 2008/13

(51) Int Cl.:
*H04N 1/60* (2006.01)

(21) Application number: 07018364.5

(22) Date of filing: 19.09.2007

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: 19.09.2006 GB 0618412
19.09.2006 US 845504 P

(71) Applicant: **Punch Graphix International N.V. 2500 Lier (BE)**

(72) Inventors:
• **Boeckx, Wouter**
**2431 Laakdal (BE)**
• **Broddin, Dirk**
**4535 HB Terneuzen (NL)**
• **Delhoune, Marc**
**2820 Bonheide (BE)**

(74) Representative: **Bird, William Edward et al**
**Bird Goën & Co.**
**Klein Dalenstraat 42A**
**3020 Winksele (BE)**

(54) **Color conversion method and system**

(57) The present invention relates to a method of preparing print ready data. The method is adapted for converting first device specific print data for printing a multicoloured print job colorimetrically adapted to a first printing device or set of colorants, e.g. inks or toners, to print data colorimetrically adapted for a second printing device or set of colorants. The method comprises processing the data equally fast or faster than the print speed. The latter may be performed during printing, such that no halts are needed in between print jobs and the printing speed is mainly determined by the speed of the printing engine. The invention also relates to a corresponding system.

**Fig. 6**

EP 1 903 774 A2

## Description

## Technical field of the invention

The present invention is related to digital color printing and finds particular application to a system and method of printing a digital color image and will be described with particular reference thereto. Of course, it is to be appreciated that the invention is also applicable to other environments and applications.

## Background of the invention

Color printing is normally carried out using three or more ink or toner colors in what is called a subtractive imaging scheme. Usually four printing inks or toners known as the "process colors" are used (cyan, magenta, yellow and black or, CMYK). Different standards are proposed to help define standard inks and printing conditions. In the United States a standard called SWOP (Specification for Web Offset Publication) has been published as TR0001 by the Commission of Graphics Arts Technology Standards (CGATS). In Europe, a standard called Euroscale evolved into ISO 12647: Process control for the manufacture of half-tone color separations, proof and production prints 12647-1 parameters and measurement methods 12647-2 Offset Lithographic processes)

Although black colors can be generated by overprinting the prescribed amounts of C, M and Y ink or toner (often called process black), deeper shadows, better neutral greys, enhanced detail rendition can result from intelligent use of the additional black (K) ink or toner. In this type of quaternary printing, use of black ink or toner can have the additional benefit of reducing the total amount of ink/toner needed.

The designer of artwork and commercial brochures to be printed has become familiar with the way the control of black in gray component replacement in graphics, linework, computer generated artwork and scanned images can lead to improved results on a printing press that behaves similar to the offset printing using the standard C,M,Y,K inkset and that comply to standard printing conditions

When plates, made from digital separations are printed with an ink or toner set C'M'Y'K that differs from the intended standardized CMYK, the printed results may approach the intended results but observable color differences in some color areas will generally lead to the need to re-create at least part of the color separations. This re-creation can start from original source data or can be carried out as a conversion starting from the digital separations from the CMYK. US 7009732 describes a method of determining such conversion data from analysis of print results in standardized versus real printing conditions. Such a conversion method is a form of color management.

The most widely adopted color management approaches such as those being standardized in the ICC Consortium (2004-10 Image technology color management - Architecture, profile format, and data structure, International Color Consortium, available from Internet http://www.color.org/), have focused on the use of input and output profiles that characterize the input and output devices in terms of a 3-component profile connection space (PCS) that is derived from models of tri-chromatic color vision by humans. CIE XYZ and L*a*b* are proposed as the Profile Connection Space (PCS) in the ICC-profile based color management. These color spaces establish a system of device independent color based on human sight resulting from work initiated by the Commission Internationale L'Eclairge (International Commission of Lighting), the CIE , on their 1931 meeting. Since the XYZ color space is based on the human perception of color, any two different colors, even though the spectrum of these two colors may be different, will be perceived as the same color by a human if the XYZ values are the same under given lighting conditions.

From the XYZ color space, additional color spaces have been derived. One of these is called CIEL*a*b*, pronounced C Lab, or L*a*b*. This color space is based on XYZ of the color referenced to XYZ of the light source or paper. Most specifications such as the SWOP standard are specified in terms of XYZ and L*a*b* under a light source such as daylight D50. It is a three component color space with each color specified in terms of L*, a*, and b*. L* specifies the lightness; and the hue and saturation can be determined from the values of a* and b*.

Users and vendors can generate input profiles and output profiles that are bi-directional in the sense that they specify both the forward and the reverse transform. The flexibility of linking the input profiles to output-profiles has taken away the need to characterize each individual combination of an input-device with an output device.

Using device link profiles in the language of the ICC can be thought of as a sequence of two profiles (from the input device to something and from something to the output device) and could be generated as a sequence of the direct transform of a first profile and the reverse transform of a the second profile, but, more generally provide a dedicated transformation from one device space to another. A direct device link transformation is useful in situations where such a transformation is used frequently or an optimization is required to achieve specific objectives.

In the discussion of the aspects of toner pigmentation and the discussion of the output gamut, L*a*b* is used to characterize the printed output of the primary colorants and overprints of the colorants according to the device input.

While this conversion from CMYK to C'M'Y'K' files via ICC profiles is an almost miraculous way of matching results from a press to a proof (or vice-versa) or from press A to press B, it's not always an ideal solution to take all the device specifics into the prepress step. An important drawback is that for demanding end-customers it may require ongoing adjustments to accommodate for differences between presses or shifts in the behavior of a given press and that such changes feed back extra work to the pre-press.

The flexible method of supplying a new output profile for the "changed" press or press setting that is automatically selected as the new output profile acting on the device independent data of the PCS, can be implemented in principle as a setting of the Raster Image Processing (RIP) system that can be selected as a late binding at the actual conversion of the pages that make up a job. For example, to print a file, a source file is converted into a file of instructions in page description language (PDL). In Raster Image Processing (RIP), a digital printer front end processes or decomposes the PDL file into contone separations of 8 bits per pixel or a byte maps. Then, the contone separations are sent to a print engine containing a half toner or screen generator. Typically, the half toner renders a raster image (or dot mask) for each of the print colors cyan, magenta, yellow and black (CMYK). Each raster image is composed of pixel data of 1 bit/pixel although multilevel presses implement generalized screening methods that output screened data of multiple bit per pixel. In the 1bit/pixel case , each bit is simply an instruction whether or not to place a dot of color at a particular point on an output page.

Vendors of Raster Image Processing (RIP) software will generally allow attachment of an output profile for execution at run-time when the files with the page description having their variable objects are translated into device dependent raster formats. This run-time approach is opposed to a composition-time approach where a designer handles color attributes and rendering intents of the elements in page from within a page composition application.

This late binding approach can have many difficulties in practical circumstances. A change of the target device will generally require reworking the job in the composition stage anyway. This is mainly because part of the image source elements are generally bypassing the in-RIP color management or require device link type profiles in given cases that require to preserve or optimize the black generation strategy within the limitations imposed by the respective gamut's. Artwork and page composition on one hand and press and press-room management on the other hand are often two different responsibilities - especially with new digital print technologies.

A discussion and proposal for optimized CMYK profiles for a digital toner based printing press can be found in US6061501.

Digital printing with advanced Digital Front Ends like the Xeikon5000 toner based printing press equipped with the X800 digital Front end have near unlimited capabilities to print complex jobs merging variable data in multipage documents in sophisticated impositions schemes. The art of composing a job includes an aspect of dynamic text flow around variable page elements, merging image elements from all kinds of sources managing the color of logos images overlays.

EP 1,111,545 A1, entitled " Page composing method using stored page elements and apparatus for using the same", which is incorporated in here by reference in its entirety describes the preferred approach to deal with the conversion of jobs into an example of what in a more general sense is defined as a "print ready format". Such print ready formats can be stored on storage media like hard-disks or similar storage device managed by dedicated storage servers on dedicated high speed networks. The print ready files may be ready to print bitmap formats, optionally stored using compressed formats. A preferred compression method used for part of the image elements is disclosed in US20010024293A1. The print ready format separates the end of graphic design stage and the introduction of a printing job into the press room.

In workflows where the amount of jobs to be ripped is big, the ripping typically does not happen on the same machine as the one steering the printer. The ripping happens at an "off-line" front-end, where the streaming to the printer happens at an "on-line" front-end. The online front-ends have typically a one-to-one link with a print engine.

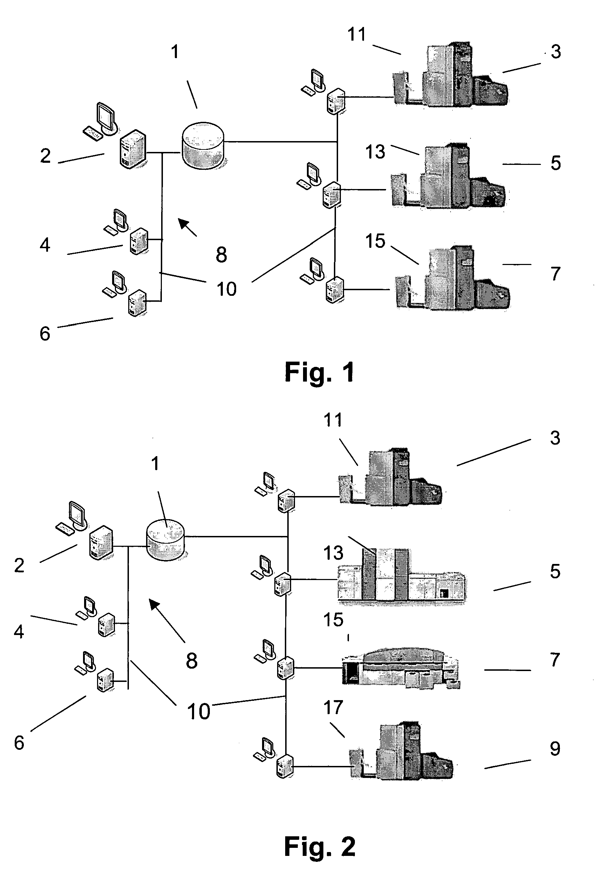

Fig 1 shows a possible configuration for a digital print set-up combing three presses 3, 5, 7 and a centralized department 8 for job preparation. In the figure, an off-line master RIP station 2 collaborates optionally with slave RIP stations 4, 6 to generate intermediate files in a printer ready raster format for temporary storage on a fast storage server 1. Of course there can be more than one off-line RIP station or departments 8. The print presses 3,5, 7 and the RIP stations 2, 4, 6 are preferably linked together by a communication network such as a shared resource network, e.g. a Local Area Network 10.

A ready-to-print format is an image format that is designed to print at the nominal speed of the print device such as 3, 5, or 7. The print device should only need to do limited processing on the ready-to-print format. For this purpose the print device has a processing engine, e.g. indicated by 11, 13, 15 in Fig. 1. Limited processing can include: decompressing, positioning in a larger image, clipping, rotating over a multiple of 90 degrees, mirroring, scaling up or down with a factor that is a power of 2, merging image elements using transparency information in the image element itself or in another image element, replacing every value using a 1-dimensional lookup table and screening.

A ready-to-print bitmap format is a format consisting of one or multiple compressed or uncompressed raster images that is designed to print at the nominal speed of the print device. The present invention also includes the production of multilevel generalizations of bitmaps as explained in EP634862 or US5654808 for example.

The print device should only need to do limited processing on the ready-to-print format. Limited processing can include: decompressing, positioning in a larger raster format, clipping, rotating over a multiple of 90 degrees, mirroring, scaling up or down with a factor that is a power of 2, merging with other raster formats using transparency information in the raster format itself or in another raster format, replacing every value using a 1-dimensional lookup table and screening.

The fast storage device 1 is the interface between 2 worlds. On the left of the figure, the prepress department 8 controls the preparation of the print jobs for the next production run. On the right, the press manager has the responsibility to keep the presses 3, 5, 7 running and to make sure the production volume is achieved on time and within quality standards even in the event that one of the presses would go down. In case the three presses 3, 5, 7 can be considered as identical, the press manager has the freedom to redirect certain runs to a different press without any issue.

However, in reality, the situation is often more complex. Fig 2 shows an exemplary configuration of a more complex but often a more practical print room set-up. Printing presses from different manufactures or using different technologies or of different sizes or capacities can provide more interesting capabilities and more efficient job completions. For example, Fig. 2 shows a digital print set-up combining four presses 3, 5, 7, 9, e.g. from three different vendors and a centralized department 8 for job preparation. If the presses 3, 5, 7, 9 differ in their characteristics or if one of the presses is equipped with a different type of toner, print ready files made for one press can generally not be used for one of the other presses or even cannot be used on any of the other presses. In the case that one of the presses goes down and the production deadline is to be met, the pressroom-manager will generally have to involve the prepress department to re-generate at least part of the jobs to be printed so that a print job originally adapted to be printed on one of the presses is now to be targeted for a different device. Often production is running multiple shifts, while prepress may be a single shift operation. Hence, before the prepress department is active again, additional delays can be expected.

US 6584903 recognizes the issue with retargeting device-specific raster images (i.e. as obtained after the raster image process adapted for a first device) to a different device without providing a complete solution. A stored copy of the final rasterized page image fully rendered for one printer should ideally be used at the second device. Unfortunately, doing so would involve a loss of image quality. Firstly, a conversion from one printer's color space to another's color space is an inherently lossy process. Secondly, in generating the initial raster image, any available rendering hints would have been applied and hence would no longer be available. Once such fully rendered, printable rasters have been generated, the images are targeted for output on a specific machine, thereby reducing portability to other printers and their subsequent editability. The solution proposed is to produce multiple outputs where the output format can be in a device independent or a device independent format depending on the contents of input pages. This device independent additional format is targeted however at later editing. It is recognized that pages generated from multiple inputs or with text annotations can introduce complexities which have to be resolved by user choices and user override options.

## Summary of the invention

It is an object of the present invention to provide good apparatus or methods for preparing printing data for printing. It is an advantage of embodiments according to the present invention that efficient methods and systems for preparing print-ready data, whereby an efficient switch between systems having a different colour profile can be made. It is an advantage of embodiments according to the present invention that systems are obtained that are able to handle large amounts of print ready, collating or merging pre-ripped print ready or page elements pages without halting in between subsequent jobs for user interaction or generation of colour conversion data. It is an advantage of systems and methods according to embodiments of the present invention that a good productivity and a reduced cycle time are obtained

The above objective is accomplished by a method and device according to the present invention. The inventors of the present invention have realized that for existing printing method flows, the printer ready format is only useful in the strict sense for a very specific print device. Re-targeting the job for a different device requires re-starting from the page description and involves reconfiguring device-specific options in the RIP process. Embodiments of the present invention provides a printing system with the ability to apply color management to a RIPed print job to thereby adapt a print job to a different printer or toner set, without having to send the job back to another person in a different department, such as a graphic artist or layout/color correction specialist, too. This has the advantage of avoiding re-ripping. Embodiments of the present invention provides a method and system for converting to a new device-specific print data optionally at printer speeds. This results in improved productivity and reduced cycle time.

In accordance with one aspect of the present invention, a digital image printing method and apparatus is provided which adjusts image characteristics of print data. The present invention proposes a printer process and system which improves the situation with respect to prior art printing methods and systems. The present invention provides a system and method of preparing print ready data. First device-specific print data that has been generated by or in a raster image process for printing a multicolored print job comprising multiple image source elements is obtained, e.g. by conventional means. The first print data has been colorimetrically adapted to a first printing device - hence it is device specific. For example color management has been applied during the process for obtaining the device-specific print data to adapt the print data to print on the first device using the colorants used in that device. Any of the print data may be a set of print files including variable data sets as in EP 1,111,545 A1. The first print data is then processed to generate print ready data colorimetrically adapted to a second printing device. The processing is performed at a speed equal to or faster than a printing speed of the second printing device.

An advantage of this procedure is that print data that has been colorimetrically adapted for a first device may be run on a second device with high quality color standards after a conversion that is less complex and time consuming than returning the print job to the prepress department. The processing can be carried out at the press and does not need the prepress department to be available.

The present invention also provides a method and system of preparing print ready data comprising, obtaining first print data by or in a raster image process for printing a multicolored print job comprising multiple image source elements, the first print data being colorimetrically adapted for printing with a first set of colorants, processing the first print data to generate print ready data colorimetrically adapted for printing with a second set of colorants, there being at least one different colorant in the second set compared to the first set. The processing is performed at a speed equal to or faster than a printing speed of the second printing device.

The advantage of this procedure is that print data that has been colorimetrically adapted for a first set of colorants on one print press may be run with a second set of colorants on the same device or on a second device with high quality color standards after a conversion that is less complex and time consuming than returning the print job to the prepress department. The processing can be carried out at the press and does not need the prepress department to be available. Any of the print data may be a set of print files including variable data sets as in EP 1,111,545 A1.

It is an advantage of embodiments according to the present invention that systems may be obtained that are able to operate in a more continuous way, i.e. with less halting, even when print jobs are switched between different printing devices. It is an advantage of embodiments according to the present invention that systems may be obtained wherein the processing can be done sufficiently fast so that the printing speed of the printer is the job-time determining factor at printing speed or faster.

These methods further may comprise streaming said print ready data for printing with the second set of colorants or for printing with said second print device.

The processing of the first print data to generate print ready data may use at least one previously stored colour conversion table. It is an advantage that a previously stored colour conversion table can be used as this increases the processing speed for the colour conversion, thus aiding in obtaining streaming print ready data. Previously stored may refer to storage before the start of the corresponding print job.

The processing of the first print data to generate print ready data may use a color conversion algorithm whereby the conversion is performed without transformation to a device independent color space. The device independent color space may be based on a human perception of color. The device independent color space may be the CIE XYZ colour coordinate system as determined by the CIE, or a related color space, such as determined by CIEL*a*b.

The first print data may be obtained during a RIP process.

The processing may be RIP-less processing.

In any of the methods and system the first print data may be print ready data, e.g. they may have been stored in a digital storage device such as a server. In particular embodiments the first print data is the result of a RIP process. The ripped print data may be piped directly to the print device or may be stored in a digital storage device such as a server. Any of the print ready data may be a set of print ready print files including variable data sets as in EP 1,111,545 A1. The first print data may be a set of print files including variable data sets. The latter is advantages as it provides a more efficient conversion method. The conversion does not need to be performed on finished pages but can be performed by processing on the variable objects, e.g. by caching the variable objects and performing further processing steps on the variable objects. These can be converted on the fly as they are generated or assembled. The latter results in efficient methods and systems as it is not necessary to generate full print-ready bitmaps of all the pages of a variable data job of significant size.

The first print data and/or the print ready data may be multicolored multipage print data for printing a multicolored, multipage print job. Any of the print ready data may be a set of print ready print files including variable data sets as in EP 1,111,545 A1. The variable data set is used at print time to modify the input per sheet, page or signature. The modified output can be texts or images or any graphical representation that can be derived from the data set. The print data for the multicolored print job may have a first number of color separations. These color separations are related to the colorants for use on the first print device or the second print device.

Generally, an image processing station processes an input image and generates a device specific contone image therefrom. The image processing station can include a raster-image processor for decomposing a representation of the input image, e.g. in page description language, into the contone image. Optionally, a screener or half-toner can be provided for converting the modified contone image into a further print ready raster image. Any of the print ready data may be a set of print ready print files including variable data sets as in EP 1,111,545 A1. A digital printer can also be provided for printing the raster image. In accordance with an aspect of the present invention a print controller allows color management of the contone image, e.g. to adapt in a true colorimetric way the contone image to be device specific for another print device than was originally intended or for a different set of toners.

The colorimetric adaptation of the print data to a specific device includes generating the print data to make use of a specific color space, e.g. of the print device. However, the print device may also be a standard print device. In this case, it is possible that none of the print presses in the print room are actually standard devices. In this case the first colorimetric adaption is to a standard or ideal or "virtual device" followed by the processing step to adapt the print data to an actual device. Hence the "first print device" should be construed broadly to include also standard, ideal or "virtual devices".

Colorimetrically adapted can include application of color management. Color management can involve adjustment of colors by manipulating print data across two or more color separations. Hence, colorimetric adaptation should be distinguished from other processes such as decompressing, positioning in a larger raster format, clipping, rotating over a multiple of 90 degrees, mirroring, scaling up or down with a factor that is a power of 2, merging with other raster formats using transparency information in the raster format itself or in another raster format, replacing every value using a 1-dimensional lookup table or screening. The step of colorimetrically adapting to the second printing device may include at least one of matrix multiplication, use of a multidimensional look up table, or interpolation. The method may further comprise the step of applying at least one one-dimensional look up table.

The color conversion algorithm may comprise a direct color conversion from a color space for the first printing device or for the printing with a first set of colorants to a color space for the second printing device or for the printing with a second set of colorants. For an intermediate format, such as a format in one of the existing standardized CMYK formats, a format in a device independent format or a format in a device specific CMYK for a press that differs form the actual press, to be useful as a "printer ready" format for a specific press, it is preferred that the color transformation to the specific device-dependent ink-values can be done while printing. Hence, it is preferable if it can be done at faster than print-speed.

The first print data may have a first number of color separations, the print ready data has a second number of color separations and the second number of color separations is larger than the first number of color separations. The print data may be adapted colorimetrically to print on a standard print device.

Processing the first print data to generate print ready data colorimetrically adapted to the second print device may include adjustment of colors by manipulating print data across two or more color separations.

Also included within the scope of the present invention is a conversion that is slower than the actual printing speed. For example, one embodiment includes a separate RIP-less (i.e. post-RIP) translation step, optionally initiated from the on-line front end that does the streaming, that automatically collects the print-ready files of a job and generates a corresponding collection of new print-ready files specific for the actual targeted print device for subsequent streaming.

The present invention also includes in some embodiments a mid-RIP translation step that automatically collects the print data within the RIP process of a print job and generates a corresponding collection of print-ready files specific for the actual targeted print device for subsequent streaming.

The present invention also relates to a system of preparing print ready data, comprising means for obtaining first device-specific print data for printing a multicolored print job comprising multiple image source elements, the first print data having being generated by or in a raster image process and being colorimetrically adapted to a first printing device, and means for processing the first print data to generate print ready data colorimetrically adapted to a second print device at a speed equal to or faster than a printing speed of the second print device.

The present invention also relates to a system of preparing print ready data comprising, means for obtaining first print data by or in a raster image process for printing a multicolored print job comprising multiple image source elements, the first print data being colorimetrically adapted for printing with a first set of colorants, and means for processing the first print data to generate print ready data colorimetrically adapted for printing with a second set of colorants, there being at least one different colorant in the second set compared to the first set at a speed equal to or faster than a printing speed of the printing with the second set of colorants.

Any of the systems as described above, further may comprise a means for streaming print ready data for printing with a second set of colorants or for printing with a second print device.

The system may comprise a memory for storing a previously determined colour conversion table and wherein said processing means is adapted to use said previously determined colour conversion table.

The means for processing may be adapted for using a color conversion algorithm whereby the conversion is performed without transformation to a device independent color space.

The means for processing may be adapted for performing a direct color conversion from a color space for the first printing device or for the printing with a first set of colorants to a color space for the second printing device or for the printing with a second set of colorants.

The first print data may be a set of print files including variable data sets.

The first print data may be print ready data.

The first print data may be a device specific contone image. The first print data and/or the print ready data may be multicolored multipage print data for printing a multicolored, multipage print job.

The means for processing may comprise means for carrying out at least one of matrix multiplication, use of a multidimensional look up table, or interpolation. The means for processing may further comprises means for applying at least one one-dimensional look up table.

The first print data may have a first number of color separations, the print ready data has a second number of color separations, and the processor may be adapted for conversion between these data..

The print data may be adapted colorimetrically to print on a standard print device.

The means for processing the first print data to generate print ready data colorimetrically adapted to the second print device may include means for adjustment of colors by manipulating print data across two or more color separations.

The system may be a control system associated with a print device.

The system may be implemented as an accelerator.

The present invention also relates to a method of preparing print ready data comprising, obtaining first device-specific print data for printing a multicolored print job comprising multiple image source elements, the first print data being generated using a raster image process and being colorimetrically adapted to a first printing device, and processing the first print data to generate print ready data colorimetrically adapted to a second print device, wherein the processing is performed in a RIP-less process.

The processing may comprise obtaining first print data during a RIP process.

The present invention also relates to an image printed by the methods for preparing print ready data on a print medium as described above.

The present invention furthermore relates to transmitting print ready data, generated by any of the methods as described above, over a network.

The present invention also relates to a computer program comprising code which executes any of the methods for preparing print ready data when executed on a processing device.

The present invention also relates to a machine readable storage device storing a computer program product as described above.

Particular and preferred aspects of the invention are set out in the accompanying independent and dependent claims. Features from the dependent claims may be combined with features of the independent claims and with features of other dependent claims as appropriate and not merely as explicitly set out in the claims.

The teachings of the present invention permit the design of improved methods and apparatus for displaying appropriate three dimensional images.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Fig. 1 indicates a possible configuration for a digital print set-up combining three presses and a centralized department for job preparation, as may be subject to methods and systems according to embodiments of the present invention.

Fig. 2 indicates a possible configuration for a digital print set-up combining four presses and a centralized department for job preparation, as may be subject to methods and systems according to embodiments of the present invention.

Fig. 3 and 4 indicate possible colour differences in colour gamut between two devices of a digital print set-up, as may occur in systems subject to methods and systems according to embodiments of the present invention.

Fig. 5 shows separate color transformation for two different devices of a digital print set-up as provided for in RIP color conversion.

Fig. 6 shows a process flow for color conversion between two different devices in a method according to embodiments of the present invention.

Fig. 7 shows possible colour differences in colour gamut between a 4-color based device and a 5-color based device, as can be used in embodiments according to the present invention.

Fig. 8. shows the correlation between different colour gamuts for different devices, as can be used in embodiments according to the present invention.

Fig. 9 and Fig. 10 show processing of files generated for Device A, Device D, Device C as well as SWOP for the extra-quaternary Device D, illustrating features of methods according to embodiments of the present example.

Fig. 11 indicates a scheme for post-processing transformation for color conversion according to an embodiment of the present invention.

Fig. 12 shows an exemplary configuration of a processing system, as can be used for performing the methods according to embodiments of the present invention.

Fig. 13 illustrates an example accelerator for performing the color transformation according to embodiments of the present invention.

In the different figures, the same reference signs refer to the same or analogous elements.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention. Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein. It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

Where in the present application reference is made to "stream" or "streaming", there is meant a technique for transferring data in real time such that it can be processed as a steady and continuous stream. In other words, when reference is made to "streaming", the print system is provided with real time data.

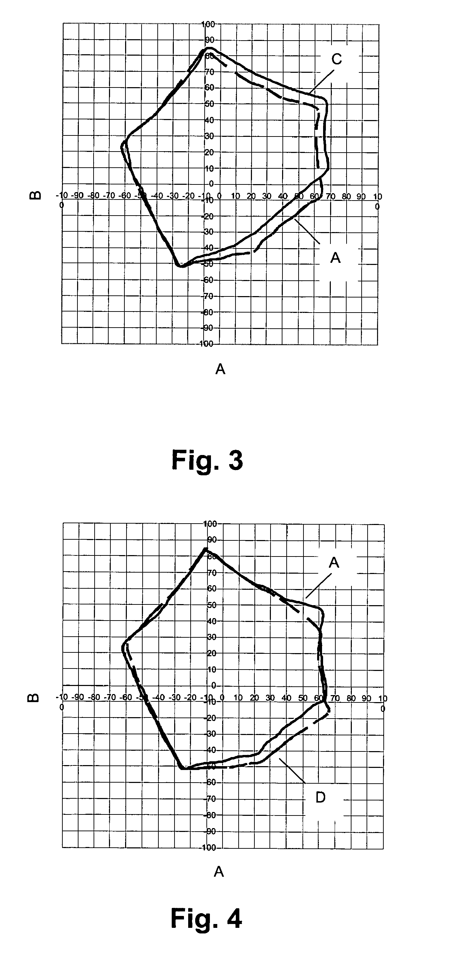

The output gamut of a printing system can be defined as solid in a color space, consisting of all those colors that are capable of being created using a particular output device and/or medium. It is mainly determined by the position in L*a*b* of the primary colorants and the properties of color mixing of the inks or toners. Table 1 shows the typical L*a*b* values for colorants used in example print systems that could be used with the present invention. For clarification the outer contour of a projection of the gamut along the L* axis into the a*b* plane is used for graphical clarification in Fig. 3 and Fig. 4. Fig. 3 and Fig. 4 show possible comparisons of the devices A and C and A and D, respectively, for the example of a system as illustrated in Fig. 2.

As can be noticed from Fig. 3 and Fig. 4 and the table 1 below, the main difference between the gamuts of the devices is to be related to the position in L*a*b* of the Magenta colorant.

System D has the more violet magenta, System C has a more reddish Magenta, while System A is closest to the ISO 12647-2.

Table 1

|  | D | L* | a* | b* |
|---|---|---|---|---|
| C- dev A | 1.4 | 54.6 | -24.2 | -50.9 |
| M -dev A | 1.4 | 50.4 | 63.4 | -6.99 |
| Y-dev A | 1.4 | 88.3 | -10.2 | 83.1 |
| K-dev A | 1.8 | 25.6 | -0.31 | -1.98 |
| M- dev D | 1.4 | 47.8 | 66.2 | -16.2 |
| Red | 1.6 | 53.6 | 66.3 | 38.4 |
| C-dev C | 1.4 | 54.9 | -27.6 | -51.5 |
| M-dev C | 1.4 | 49.6 | 68.8 | 3.98 |
| Y-dev C | 1.4 | 89.2 | -5.42 | 86.3 |
| K-dev C | 1.8 | 23.47 | 0.42 | 0.02 |

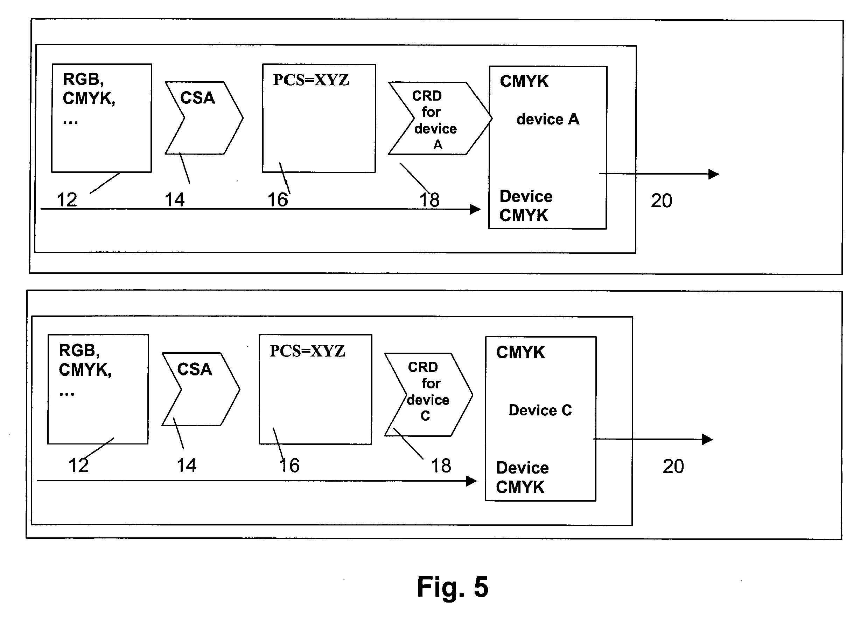

Fig. 5 represents a known color transformation as provided for in RIP color conversion using the terminology of PostScript as can be found in the PostScript Level 2 reference manual (third edition, Addison Wesley, 1999). Input- and output- profiles 12 such as ICC profiles that comply with the specifications of the ICC are converted to Color Space Arrays (CSA) 14 for input profiles. The 3-component profile connection space (PCS) 16 derived from models of tri-chromatic color vision by humans can be CIE XYZ for example (or L*a*b* as the Profile Connection Space (PCS) in the ICC-profile based color management). The PCS is a device independent color space. Since the XYZ color space is based on the human perception of color, any two different colors, even though the spectrum of these two colors may be different, will be perceived as the same color by a human if the XYZ values are the same under given lighting conditions. To make the print data device specific, Color Rendering Dictionaries (CRD) 18 are used to adapt the print data for output profiles, i.e. to generate device specific print data 20. The device specific print data 20 can be in the form of a device specific contone that is then halftoned or screened to form a binary or multilevel screened image.

The most straightforward approach in color management would be to have separate RIP processes as illustrated in Fig. 5 for the devices A and C. For example, the two RIP's could be performed using the same input images to thereby generate ready to print files 20 adapted colorimetrically to the print devices A and C, respectively. This requires twice the RIP processing and the storing of two or more fully ripped print jobs in order to be certain that there is no delay in the print room if one device is off-line.

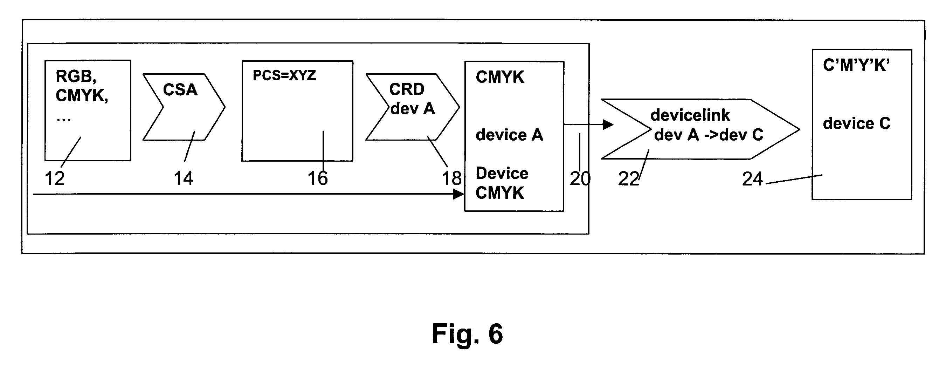

An embodiment of the present invention is shown schematically in Fig. 6. In this process flow the RIP processing is carried out for the intended printing device A to generate print data 20 colorimetrically adapted to device A (CMYK(dev A)) as has been described for Fig. 5. For example; pint data 20 is in the form of a device specific contone image. If this device is not available for printing at the allotted time, the print data CMYK (dev A) is post-processed (process step = "devicelink") 22 to new print data 24 colorimetrically adapted to device C (C'M'Y'K' (dev C)). Such post processing may be performed in a fast way, e.g. equally fast or faster than the printing speed of the device to be used. The latter may allow streaming of the processed print ready data to device C, such that the processing may be performed simultaneously with the print task. The processing thereby may make use of a stored colour conversion algorithm, e.g. a stored colour conversion table or function for switching from one colour to another. The latter may be advantageous as it may assist in fast processing and result in reducing or avoiding halting between subsequent jobs as the colour conversion can be done simultaneously. In this way, halting and/or restarting of the print engine may be avoided, which otherwise would cause loss of productivity or causes generation of excess pages and thus an additional cost and optionally interference in later finishing steps.

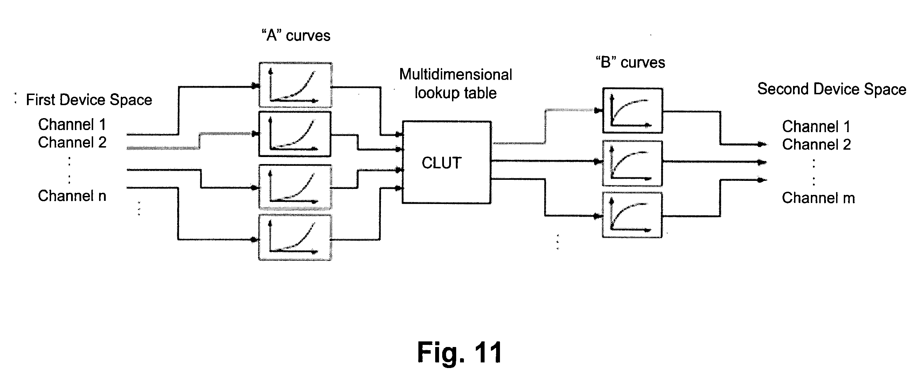

A scheme for the devicelink transformation 22 in accordance with an embodiment of the present invention which is colorimetrically better than the operation of one dimensional look up tables can be a modified version of the one proposed in the ICC Specification ICC.1: 2004-10 (Profile version 4.2.0.0) as shown schematically in Fig. 11 for transformation between a first and second device (A,B). This process can include matrix operations using pixel data from more than one of the color separations, and/or use of multidimensional look up tables and/or use of an interpolator to interpolate between values. A variety of methods can be used to complete the transform. Advantagously, the transform algorithm or corresponding data for performing the transformation may be previously stored, such that no overhead is induced by generation of colour conversion tables or by loading input and output profiles for the different devices at job time. For example, the process can include a first adaptation using one dimensional look up tables (LUT) followed by a matrix operation applied to all the separations followed by a further adaptation using one dimensional look up tables. In the case of a 4C-4C transformation a one dimensional adaptation "reverses" the device specific values of CMYK to a modified set 'C,'M,'Y,'K:

$$['C] = LUT_{C \to C'} [C]$$

$$['M] = LUT_{M \to M'} [M]$$

$$['Y] = LUT_{Y \to Y'} [Y]$$

$$['K] = LUT_{K \to K'} [K]$$

which provides the adaptation from the Curve A of Fig. 11 related to the first device A.

A matrix operation then generates new values C"M"Y"K"

$$\begin{bmatrix} C'' \\ M'' \\ Y'' \\ K'' \end{bmatrix} = \begin{bmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{bmatrix} \begin{bmatrix} 'C \\ 'M \\ 'Y \\ 'K \end{bmatrix}$$

and provides the transform shown in Fig. 11 referred to there as a multidimensional look up table. One aspect of the matrix multiplications is to provide intermediate values between known values by interpolation. Hence interpolation may be applied at any stage of this procedure to increase the number of values or to provide an new intermediate value.

An optional further operation of a one dimensional adaptation can be as:

$$[C'] = LUT_{C \to C'} [C'']$$

$$[M'] = LUT_{M \to M'} [M'']$$

$$[Y'] = LUT_{Y \to Y'} [Y'']$$

$$[K'] = LUT_{K \to K'} [K'']$$

which provides the adaptation to the device specific Curve B of Fig. 11.

Note that in this transformation there is no intermediate step of expressing the color value for each pixel in a color space, especially a 3 component color space such as XYZ, L*, a*, b* etc. followed by a further step of transformation back into CMYK space. Hence this is a direct transformation from CMYK to C'M'Y'K' via one or more steps.

Alternatively the transformation can be made in a single matrix operation:

$$\begin{bmatrix} C' \\ M' \\ Y' \\ K' \end{bmatrix} = \begin{bmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{bmatrix} \begin{bmatrix} C \\ M \\ Y \\ K \end{bmatrix}$$

Note that in these transformations there is no intermediate step of expressing the color value for each pixel in a color space such as XYZ, L*, a*, b* etc. followed by a further transformation back into CMYK space. Hence this is a direct matrix transformation from CMYK to C'M'Y'K'.

Other methods may use multidimensional look up tables. An example can be:

A first one dimensional the transformation:

$$['C] = LUT_{C \to C'} [C]$$

$$['M] = LUT_{M \to M'} [M]$$

$$['Y] = LUT_{Y \to Y'} [Y]$$

$$['K] = LUT_{K \to K'} [K]$$

which provides the adaptation from the Curve A of Fig. 11 related to the first device A.

Followed by:

$$\begin{bmatrix} C'' \\ M'' \\ Y'' \\ K'' \\ X \end{bmatrix} = LUT_{'C'M'Y'K \to C''M''Y''K''X} \begin{bmatrix} 'C \\ 'M \\ 'Y \\ 'K \end{bmatrix}$$

using the mulitdimensional $LUT_{C'M'Y'K' \to C''M''Y''K''X}$ (see Fig. 11) if the transformation is from the space CMYK to the space CMYKX where X is an extra-quaternary toner.

Optionally additional transformations may be applied, e.g.

$$[C'] = LUT_{C \rightarrow C'} [C'']$$

$$[M'] = LUT_{M \rightarrow M'} [M'']$$

$$[Y'] = LUT_{Y \rightarrow Y'} [Y'']$$

$$[K'] = LUT_{K \rightarrow K'} [K]$$

$$[X'] = LUT_{X \rightarrow X'} [X]$$

corresponding to the adaptation to the device specific B curves of Fig. 11.

Note that in these transformations there is no intermediate step of expressing the color value for each pixel in a color space such as XYZ, L*, a*, b* etc. followed by a further transformation to the new CMYKX space. Hence this is a direct matrix transformation from CMYK to C'M'Y'K'X'. For additional colors the principles described above are extended.

Alternatively the transformation can be made in a single multidimensional Look Up Table operation:

$$\begin{bmatrix} C' \\ M' \\ Y' \\ K' \\ X \end{bmatrix} = LUT_{CMYK \rightarrow C'M'Y'K'X} \begin{bmatrix} C \\ M \\ Y \\ K \end{bmatrix}$$

Note that in these transformations there is no intermediate step of expressing the color value for each pixel in a color space such as XYZ, L*, a*, b* etc. followed by a further transformation back into CMYK space. Hence this is a direct matrix transformation from CMYK to C'M'Y'KX.

The matrix coefficients or the values in the look up tables can be obtained by proof printing the two printers and constructing the relevant values by optometric measurements and/or human test persons being used to examine and compare the results of printing on the two devices.

Converting to less than 4 separations like Grayscale (only K) or 2 colors (K+ 1) highlight color at print time is a useful feature and is also included within the scope of the present invention.

In a further aspect, if the color gamuts of device A and device C do not differ much the CMYK to C'M'Y'K' transformation can be optimized as a devicelink profile taking into account preferred black generation as intended by a designer that is familiar with how to work with device A. Using a relative colorimetric approach for the devicelink process 22 will allow the pressroom manager to match the results that customers expect from device A when using device C. To the extent that the gamuts differ as indicated above according to Fig. 3 and Fig. 4, some colors will have to be mapped into the gamut of device C, e.g. if C is slightly smaller in the blue tones, or some of the red capabilities of device C will not be used.

In a preferred embodiment of the present invention, the devicelink transformation 22 as shown schematically in Fig 6 is implemented as a separate and independent RIP-less step (e.g. post-RIP step) after completion of the RIP process.

The term "RIP-less" refers to the fact that all vector-based graphics have already been rendered to a raster format to generate the first print data 20 that is adapted colorimetrically to device A. The operations allowed in the RIP-less step are those allowed on the print data, e.g. in a print-ready format, complemented by one or more specific devicelink transformations.

In an even more preferred embodiment the devicelink transformation 22 as in Fig 6 is implemented as a separate step that acts on a printer ready format. The printer ready format can be already stored, e.g. in permanent storage, in a computer system that streams the real time print data to the print engine of print device C.

Preferably, the devicelink transformation 22 of Fig. 6 acts on print data, e.g. in a print-ready format, at the same speed or higher than the print speed of device C, i.e. in a real time streaming process that keeps up with the print speed of the print engine of print device C.

Returning to Fig. 2 and Fig. 6, the printing system can include a graphics processing department 8 and a pressroom with printing devices 3, 5, 7, 9 each having a control system 11, 13, 15, 17, respectively. The control system can be a programmable microprocessor system. An operator creates print ready print data in the graphics processing department. Any of the print data may be a set of print files including variable data sets as in EP 1,111,545 A1. This print ready data is then processed in the control system where color management to adjust the print job to a different print device is carried out, and then the relevant print device prints. By using variable data sets, the conversion can be performed on the variable sets only, by caching them and further processing them such that these can be converted on the fly as they are assembled or generated. The latter avoids that complete sets of finished pages need to be retargeted which would be inefficient, especially as initially pages are often generated at run time in very long automatic series. In other words, it may be avoided that full printready bitmap of all the pages of a variable data job of significant size need to be generated and then converted.

The print job can contain objects such as color images, graphics and/or text, e.g. from scanned images, computer programs, or other generation means to create a composite image. The resulting contone image or native file can be converted into a page description language (PDL), e.g. Postscript. The PDL file can include contone data (for images), text data, and graphic data. The image is then raster image processed and can be stored in memory, e.g. on a hard disk. RIP-ing can be done with a RIP processor which decomposes or RIPs the PDL file into a contone separations, i.e., a byte maps. The print job is then transferred to the print room and is input to a specific print device, e.g. via a Local Area Network. A press operator can use the control system of the print device, e.g. via menu options, to adjust the parameters of a print job. In particular, contone print data may be modified post-RIP so that it can be printed on another device or with another set of toners than was originally planned in a colorimetrically true manner. Conventional post-RIP processing can also be carried out which is to be appreciated by those skilled in the art. The print engine of the print device can include a half-toner or screen generator which decomposes the color managed post-RIP contone print data into screened images for printing. In binary screened images, each screened separation is a bit map image or series of on and off instructions to tell the printer where to place an ink or toner dot of a particular process color or spot color on a printing medium. The present invention also includes multilevel generalizations of bitmaps as explained in EP634862 or US5654808.

In one aspect of the present invention, the printing is extra-quaternary printing.

The term "extra-trinary printing" or "extra-quaternary printing" can be used to describe printing with more than 3 or 4 subtractive colorants (toner, inks), respectively. Extra-quaternary printing comprises printing methods that are referred to as hi-fi color printing. In most cases the additional colorants are chosen in an attempt to extent the achievable color gamut. The present invention in one aspect relates to printing with 5 or more toners or inks.

Whereas the degrees of freedom of adding black to CMY leads to the concept of black substitution and grey component replacement (GCR) or under color removal, the addition of one or more R, G, B -like toners or inks can be looked upon as additional (secondary) chromatic toners or inks adding additional degrees of freedom in color separation that allow replacement certain combinations of primary (C,M,Y) inks by ink combinations including the secondary colorants.

For example, the use of Orange and Green toners in addition to primaries similar to C, M and Y is the basis of commercially relevant systems like Hexachrome. There are a number of contributions on separation strategies for 6-color and 7-color hifi systems. For designers to take advantage of the extended gamut that is accessible by extra-quaternary printing systems, there is a need for standardization.

Recently a number of vendors of Toner based Digital Printing Systems have launched products or described configurations with 5 print stations, e.g. D. Tyagi, P Alexandrovitch, Y. Ng, R. Allen and D. Herrick, IS&T NIP20 proceedings p 135 - p 138. 5 color systems typically add one color to a 4 color ink set that approaches the CMYK of ISO 12647 or SWOP. In this way, the additional colorant extents the color space in a single direction. Although commercial device profile creation vendors start to provide tools to generate ICC profiles between the PCS and DeviceN output device spaces the use of such profiles imposes severe limitations on allowable input formats and typically excludes CMYK as explained in D. Tyagi, P Alexandrovitch, Y. Ng, R. Allen and D. Herrick IS&T NIP20 proceedings p 135 - p 138.

Manipulating CMYK images to generate additional image separations is discussed in US 5870 530 and the corresponding EP 833 500 B1. These documents discuss issues with a simple substitution scheme where intermediate colors are used to replace equal amounts of primary colors or equal amounts of a two primary color overlay and a primary color.

The approach presented has the benefit of being simple and fast from a computational point of view. The scheme is oversimplified however as it assumes the substituting color provides a complete colorimetric match with the overlay of identical amounts of the combination of two primary colors it is supposed to replace,

There are several difficulties with a simple substitution scheme as in US 5870 530 that need to be countered for the method to work in a real workflow context:

> 1) The model proposes the use of a secondary colorant which is to be chosen such that a full layer of the secondary colorant replaces an overlay of the full layers of two of the primary colorants (e.g. 100% Red replaces 100% Y+100%M)
> 2) the deviations of L*a*b* of patches before and after the substitution differ too much to use this type of DeviceN (C,M,Y,K,X) images in a graphical context where color predictability and color management is a necessity.

The present invention provides an improved method and system for solving problem 1) by generalizing the model in allowing that the secondary colorant is to be chosen such that a full layer of the secondary colorant replaces an overlay of the optionally partial layers of two of the primary colorants (e.g. 100% Red replaces 90% Y + 80% M). This flexibility allows the substitution to be adapted to the actual toner formulation chosen for the fifth colorant.

Even in this improved method, the relative colorimetric accuracy between the original patches and the colors printed using the fifth colorant using the substitution scheme can require additional color management to adapt the source images for colorimetric consistency. This means that a printer that would present itself as a new CMYK printer and that would implement the substitution method behind the screens would still require its own color profiles. In an embodiment, the present invention provides a RIP solution that allows to create multiseparation profiles with N separations, e.g. four color profiles such as CMYK output profiles for a printing system that converts the multi-separation profiles to profiles N + 1, e.g. CMYK to CMYKX. Conversion from N separations to N+2, N+3 is also possible.

A perceptual approach that maps source images starting from CMYK has received little or no attention as there is no straightforward way of using the additional gamut based in the direction of the added color based on source data that uses the CMYK of the first four colorants.

Based on experiments, it has been found the color shifts induced by the change to the new ink combinations need to be corrected by traditional color management. As this color management is to be taken into account by measuring the overall system output and creating output profile for the new system, the prepress has to take into account the color transformation. As such there is no independence for the press management.

Simple substitution schemes in an ink jet context for converting combinations of primary colorants by secondary colorants as in US5960161, leave the color adjustments to traditional color management, resulting in the need for prepress to take into account the device specific color transformation.

The present invention in one aspect exploits the power of an N to N+M colorants conversion, where M can be one or more, e.g. any of the conversions 4C-5C, 4C-6C, 4C-7C, 4C-8C as a tool to simulate different presses and or standards in a relative colorimetric manner.

In the discussion of table 1 and Figs 3 and 4, it was noted that the magenta colorant can differ between toner versions for a given machine as well as between digital presses from different vendors that can co-exist in a pressroom. Study of 5C (five color) printing using a fifth colorant such as red has shown that if the red of table 1 is combined with a special choice for a non-standard magenta that is shifted away towards the violet from the proposed standards such as ISO 12647 (M-D for device D in table 1), a color gamut is obtained that comes close to being capable of relative colorimetrically correct rendering of the device CMYK gamut of devices A, D, C as well as the relevant standards.

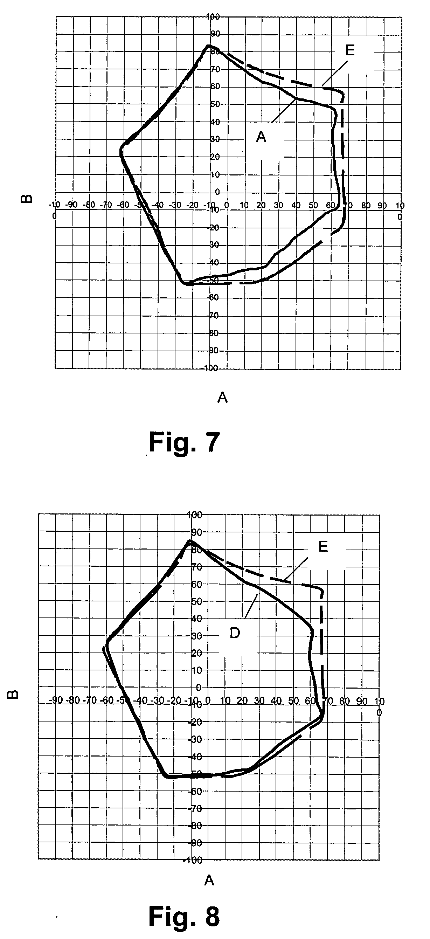

Fig. 7 shows how the gamut of Device A is comprised within the gamut of the New Device E that is based on 5 colorants. Fig. 8 shows the gamut of device E in comparison to the gamut achieved with device D which corresponds to Device E with the 5th print station disabled and utilizing the special Magenta.

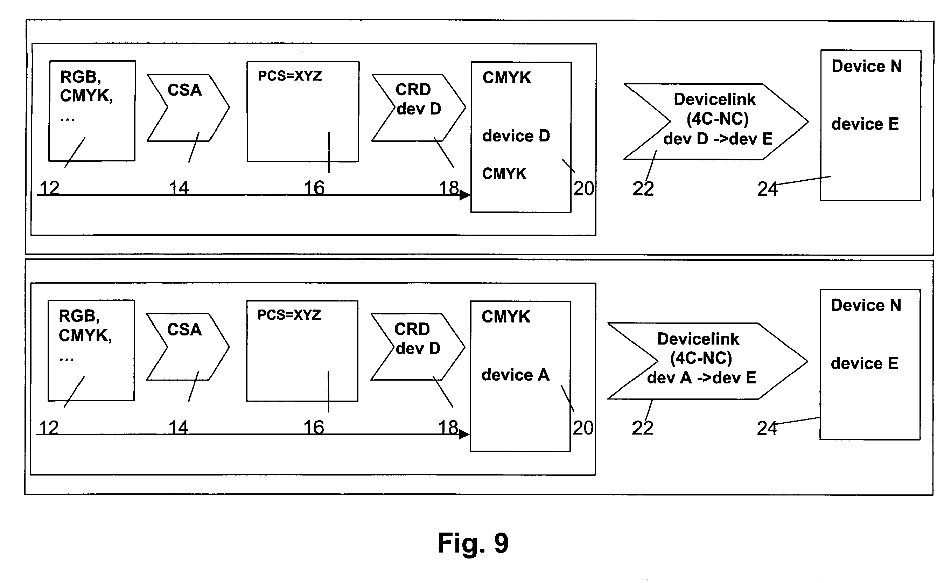

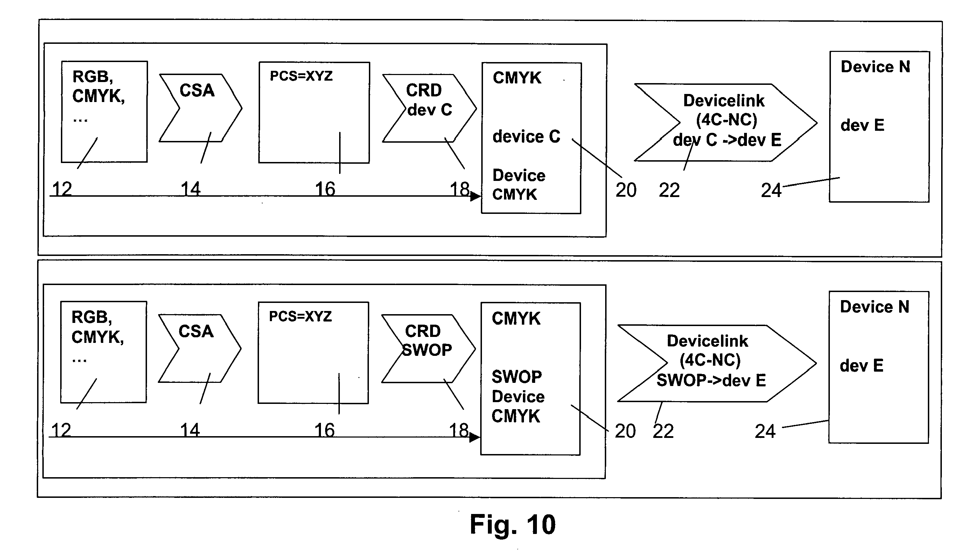

Fig. 9 and Fig. 10 shows how the extra-quaternary Device E can process files generated for Device A, Device D, Device C as well as SWOP by a separate process based on a devicelink transformation from 4C to DeviceN.

The devicelink transformation can act, for example, on a 4 channel CMYK input and results in an N channel output where N is different from 4. The devicelink transformation can act on a 4 channel CMYK input and results in an N channel output where N is larger than 4, i.e. N > 4.

Accordingly the present invention includes a printing method using a deviceN printing system that supports a print mode in which it accepts already ripped or partly ripped image data as provided in device-specific CMYK or a standard CMYK print data wherein the conversion of the print data into a deviceN image is according to one of a set of pre-loaded 4C-NC conversion algorithms and is implemented as a separate step in or after the raster process.

The conversion can be from four colorants to a larger number such as five (i.e. N=5 in NC) in which three of the colorants correspond to C, Y and K and the fourth and fifth colorant (or more colorants) have a* value >55 as this is found to work well in providing means for emulation of presses that each use o single but different magenta colorant. Even more preferred is a conversion can be from four colorants to a larger number such as five (i.e. N=5 in NC) in which three of the colorants correspond to C, Y and K and the fourth and fifth colorant (or higher number of colorants) have a* value >60.

In an advantageous embodiment of the present invention, the devicelink transformation 22 as in Fig 6, 9 or 10 is implemented as a separate step after completion of the RIP process.

In an even more advantageous embodiment the devicelink transformation 22 as in Fig 6, 9 or 10 is implemented as a separate step that acts on a print-ready format.

In an even more advantageous embodiment the devicelink transformation 22 as in Fig 6, 9 or 10 is implemented as a separate step that acts on a print-ready format that is pulled from permanent storage by a computer system that streams the real time print data to the print engine of a print device.

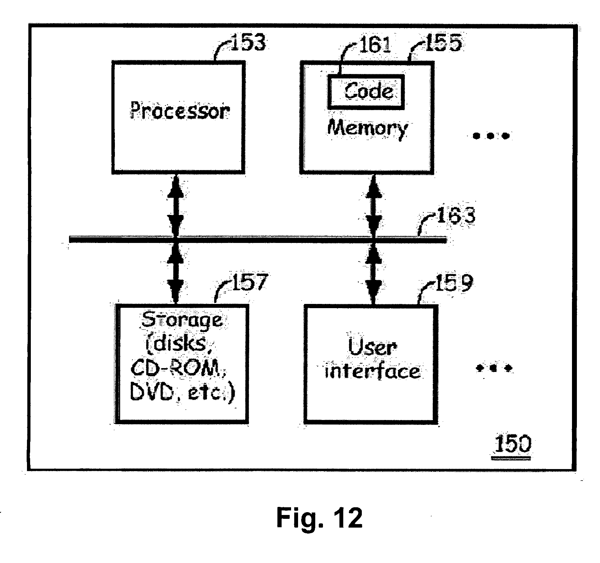

Such method embodiments as are described above may be implemented in a processing system 150 associated with a print device 3, 5, 7, 9 such as shown in schematically in Fig. 12. Fig. 12 shows one configuration of processing system 150 that includes at least one programmable processor 153 coupled to a memory subsystem 155 that includes at least one form of memory, e.g., RAM, ROM, and so forth. A storage subsystem 157 may be included that has at least one disk drive and/or CD-ROM drive and/or DVD drive. In some implementations, a display system, a keyboard, and a pointing device may be included as part of a user interface subsystem 159 to provide for a user to manually input information or control data for steering the adaption of the print data received by the processing system to the alternative print device or set of toners. Ports for inputting and outputting data also may be included. More elements such as network connections, interfaces to various devices especially print devices, and so forth, may be included, but are not illustrated in Fig. 12. The various elements of the processing system 150 may be coupled in various ways, including via a bus subsystem 163 shown in Fig. 12 for simplicity as a single bus, but will be understood to those in the art to include a system of at least one bus. The memory of the memory subsystem 155 may at some time hold part or all (in either case shown as 161) of a set of instructions that when executed on the processing system 150 implement the step(s) of any of the method embodiments described herein. Thus, while a processing system 150 such as shown in Fig. 12 is prior art, a system that includes the instructions to implement novel aspects of the present invention is not prior art, and therefore Fig. 12 is not labelled as prior art.

It is to be noted that the processor 153 or processors may be a general purpose, or a special purpose processor, and may be for inclusion in a device, e.g., a chip that has other components that perform other functions, for example it may be an embedded processor.

Also with developments such devices may be replaced by any other suitable processing engine, e.g. an FPGA. Thus, one or more aspects of the present invention can be implemented in digital electronic circuitry, or in computer hardware, firmware, software, or in combinations of them. Furthermore, aspects of the invention can be implemented in a computer program product tangibly embodied in a carrier medium carrying machine-readable code for execution by a programmable processor. Method steps of aspects of the invention may be performed by a programmable processor executing instructions to perform functions of those aspects of the invention, e.g., by operating on input data and generating output data.

Furthermore, aspects of the invention can be implemented in a computer program product tangibly embodied in a carrier medium carrying machine-readable code for execution by a programmable processor. The term "carrier medium" refers to any medium that participates in providing instructions to a processor for execution. Such a medium may take many forms, including but not limited to, non-volatile media, and transmission media. Non-volatile media includes, for example, optical or magnetic disks, such as a storage device which is part of mass storage. Volatile media includes mass storage. Volatile media includes dynamic memory such as RAM. Common forms of computer readable media include, for example a floppy disk, a flexible disk, a hard disk, magnetic tape, or any other magnetic medium, a CD-ROM, any other optical medium, punch cards, paper tapes, any other physical medium with patterns of holes, a RAM, a PROM, an EPROM, a FLASH-EPROM, any other memory chip or cartridge, a carrier wave as described hereafter, or any other medium from which a computer can read. Various forms of computer readable media may be involved in carrying one or more sequences of one or more instructions to a processor for execution. For example, the instructions may initially be carried on a magnetic disk of a remote computer. The remote computer can load the instructions into its dynamic memory and send the instructions over a telephone line using a modem. A modem local to the computer system can receive the data on the telephone line and use an infrared transmitter to convert the data to an infrared signal. An infrared detector coupled to a bus can receive the data carried in the infrared signal and place the data on the bus. The bus carries data to main memory, from which a processor retrieves and executes the instructions. The instructions received by main memory may optionally be stored on a storage device either before or after execution by a processor. The instructions can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

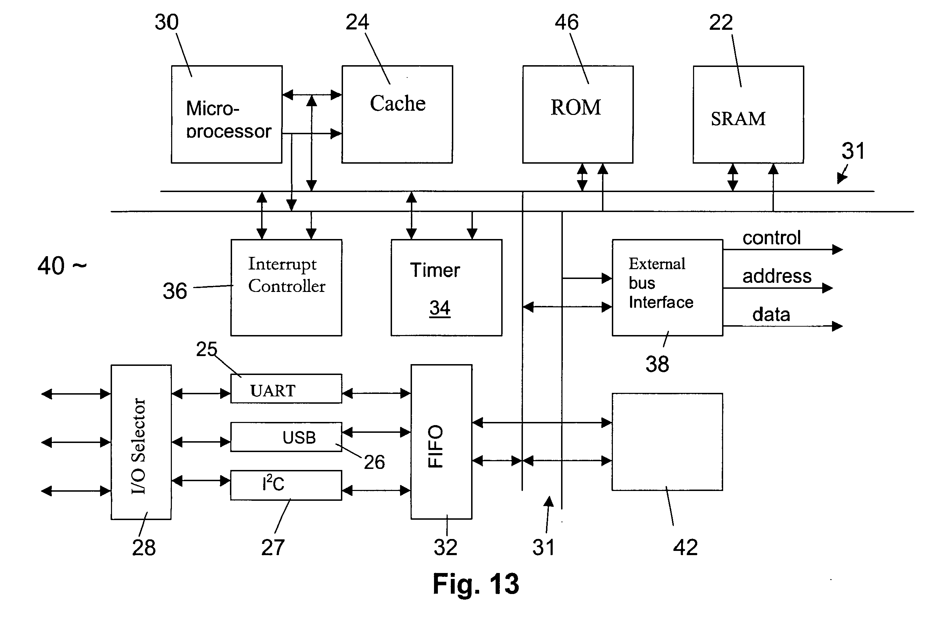

One way to meet the requirement that the color transformation from a known printer ready format such as a CMYK printer ready format to the specific device-dependant ink-values can be done at faster than print-speed, is to provide programmable hardware to implement the sequence of LUT and matrix interpolations using for example a combination of dedicated and multipurpose hardware components, including Field Programmable Gate (FPGA) arrays. An example of such an accelerator 40 will be described with reference to Fig. 13.

The accelerator 40 may be constructed as a VLSI chip around an embedded microprocessor 30 such as an ARM7TDMI core designed by ARM Ltd., UK which may be synthesized onto a single chip with the other components shown. A zero wait state SRAM memory 22 may be provided on-chip as well as a cache memory 24. One or various I/O (input/output) interfaces 25, 26, 27 may be provided, e.g. UART, USB, $I^2C$ bus interface as well as an I/O selector 28. These interfaces can connect to the Local Area Network 10 and to the print device with which the accelerator works. FIFO buffers 32 may be used to decouple the processor 30 from data transfer through these interfaces, e.g. to and from the network linking the print devices and the interface to the print device that uses the accelerator. A counter/timer block 34 may be provided as well as an interrupt controller 36. The devicelink transformation 22 of Fig. 6, 9 or 10 is provided by block 42 which can handle the matrix manipulations of the data. Block 42 may be configured around an FPGA and cooperates with the processor 30 for processing the print data. Software programs may be stored in an internal ROM (read only memory) 46. Access to an external memory may be provided an external bus interface 38 with address, data and control busses. The various blocks of accelerator 40 are linked by suitable busses 31.

Control mechanisms of the present invention to control the printing of print data may be implemented as software to run on processor 30. The procedures described above may be written as computer programs in a suitable computer language such as C and then compiled for the specific processor in the embedded design. For example, for the embedded ARM core VLSI described above the software may be written in C and then compiled using the ARM C compiler and the ARM assembler.

It is to be understood that although preferred embodiments, specific constructions and configurations, as well as materials, have been discussed herein for devices according to the present invention, various changes or modifications in form and detail may be made without departing from the scope and spirit of this invention. For example, any formulas given above are merely representative of procedures that may be used. Functionality may be added or deleted from the block diagrams and operations may be interchanged among functional blocks. Steps may be added or deleted to methods described within the scope of the present invention.

**Claims**

1. A method of preparing print ready data comprising,

   - obtaining first device-specific print data for printing a multicolored print job comprising multiple image source elements, the first print data having being generated by or in a raster image process and being colorimetrically adapted to a first printing device (3, 5, 7, 9), and
   - processing the first print data to generate print ready data colorimetrically adapted to a second print device (3, 5, 7, 9), wherein the processing is performed at a speed equal to or faster than a printing speed of the second printing device (3, 5, 7, 9).

2. A method of preparing print ready data comprising,

   - obtaining first print data by or in a raster image process for printing a multicolored print job comprising multiple image source elements, the first print data being colorimetrically adapted for printing with a first set of colorants, and
   - processing the first print data to generate print ready data colorimetrically adapted for printing with a second set of colorants, there being at least one different colorant in the second set compared to the first set, wherein the processing is performed at a speed equal to or faster than a printing speed of the printing with a second set of colorants.

3. A method according to any of claims 1 or 2, the method further comprising streaming said print ready data for printing with the second set of colorants or for printing with said second print device (3, 5, 7, 9).

4. A method according to any of claims 1 to 2, wherein said processing of the first print data to generate print ready data uses at least one previously stored colour conversion table.

5. A method according to any of claims 1 to 3, wherein said processing of the first print data to generate print ready data uses a color conversion algorithm whereby the conversion is performed without transformation to a device independent color space.

6. A method according to claim 4, wherein said color conversion algorithm comprises a direct color conversion from a color space for the first printing device (3, 5, 7, 9) or for the printing with a first set of colorants to a color space for the second printing device (3, 5, 7, 9) or for the printing with a second set of colorants.

7. The method of any of claims 1 to 6, wherein the first print data is a set of print files including variable data sets.

8. The method of any of the previous claims wherein the first print data is print ready data.

9. The method of any previous claim wherein the first print data is a device specific contone image.

10. The method of any previous claim wherein the first print data and/or the print ready data are multicolored multipage print data for printing a multicolored, multipage print job.

11. The method according to any previous claim wherein the first print data has a first number of color separations, the print ready data has a second number of color separations and the second number of color separations is larger than the first number of color separations.

12. The method of any previous claim wherein processing the first print data to generate print ready data colorimetrically adapted to the second print device includes adjustment of colors by manipulating print data across two or more color separations.

13. A system (150) of preparing print ready data, comprising

   - means for obtaining first device-specific print data for printing a multicolored print job comprising multiple image source elements, the first print data having being generated by or in a raster image process and being colorimetrically adapted to a first printing device (3, 5, 7, 9),
- means for processing the first print data to generate print ready data colorimetrically adapted to a second print device at a speed equal to or faster than a printing speed of the second print device (3, 5, 7, 9).

14. A system (150) of preparing print ready data comprising,

    - means for obtaining first print data by or in a raster image process for printing a multicolored print job comprising multiple image source elements, the first print data being colorimetrically adapted for printing with a first set of colorants,
    - means for processing the first print data to generate print ready data colorimetrically adapted for printing with a second set of colorants, there being at least one different colorant in the second set compared to the first set at a speed equal to or faster than a printing speed of the printing with the second set of colorants.

15. A system (150) according to any of claims 13 or 14, the system further comprising a means for streaming print ready data for printing with a second set of colorants or for printing with a second print device.

16. A system (150) according to any of claims 13 to 15, wherein the system comprises a memory for storing a previously determined colour conversion table and wherein said processing means is adapted to use said previously determined colour conversion table.

17. A system (150) according to any of claims 13 to 16, wherein said means for processing is adapted for using a color conversion algorithm whereby the conversion is performed without transformation to a device independent color space.

18. A system (150) according to any of claims 13 to 17, wherein said means for processing is adapted for performing a direct color conversion from a color space for the first printing device (3, 5, 7, 9) or for the printing with a first set of colorants to a color space for the second printing device or for the printing with a second set of colorants.

19. The system (150) according to any of claims 13 to 18, wherein the first print data is a set of print files including variable data sets.

20. The system (150) according to any of the claims 13 to 19 wherein the first print data is print ready data.

21. The system (150) according to any of the claims 13 to 20, wherein the first print data has a first number of color separations, the print ready data has a second number of color separations, and the processor is adapted for between these data..

22. The system (150) of any of the claims 13 to 21 wherein the means for processing the first print data to generate print ready data colorimetrically adapted to the second print device includes means for adjustment of colors by manipulating print data across two or more color separations.

23. The system (150) of any of the claims 13 to 22, wherein the system is a control system associated with a print device.

24. The system (150) of any of the claims 13 to 23 implemented as an accelerator.

25. A method of preparing print ready data comprising,

    - obtaining first device-specific print data for printing a multicolored print job comprising multiple image source elements, the first print data being generated using a raster image process and being colorimetrically adapted to a first printing device (3, 5, 7, 9), and
    - processing the first print data to generate print ready data colorimetrically adapted to a second print device, wherein the processing is a RIP-less process.

26. A method according to claim 25 wherein the processing comprises obtaining first print data during a RIP process.

27. An image printed by the method of any of the claims 1 to 12 and 25 to 26 on a print medium.

28. Transmitting print ready data generated by any of the claims 1 to 12 and 25 to 26 over a network.

29. A computer program comprising code which executes any of the methods of claims 1 to 12 and 25 to 26, when executed on a processing device.

30. A machine readable storage device storing the computer program product of claim 29.

**Fig. 1**

**Fig. 2**

**Fig. 3**

**Fig. 4**

Fig. 5

**Fig. 6**

EP 1 903 774 A2

Fig. 7

Fig. 8

**Fig. 9**

EP 1 903 774 A2

RGB, CMYK, ... 12 — CSA 14 — PCS=XYZ 16 — CRD dev C 18 — CMYK device C Device CMYK 20 — Devicelink (4C-NC) dev C ->dev E 22 — Device N dev E 24

RGB, CMYK, ... 12 — CSA 14 — PCS=XYZ 16 — CRD SWOP 18 — CMYK SWOP Device CMYK 20 — Devicelink (4C-NC) SWOP->dev E 22 — Device N dev E 24

Fig. 10

EP 1 903 774 A2

**Fig. 11**

**Fig. 12**

**Fig. 13**

EP 1 903 774 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7009732 B
- US 6061501 A
- EP 1111545 A1
- US 20010024293 A1
- EP 634862 A
- US 5654808 A
- US 6584903 B
- US 5870530 A
- EP 833500 B1
- US 5960161 A

**Non-patent literature cited in the description**

- *Image technology color management - Architecture, profile format, and data structure,* October 2004, http://www.color.org/
- PostScript Level 2 reference manual. Addison Wesley, 1999
- **D. TYAGI ; P ALEXANDROVITCH ; Y. NG ; R. ALLEN ; D. HERRICK.** *IS&T NIP20 proceedings,* 135-138